# EUROPEAN PATENT APPLICATION

(11) **EP 4 293 144 A1**
(43) Date of publication of application: **20.12.2023**
(21) Application number: 23179453.8
(22) Date of filing: 15.06.2023
(51) Int. Cl.: C25D 17/12, C25D 1/04

(54) **POSITIVE ELECTRODE PLATE FOR COPPER FOIL MANUFACTURING APPARATUS AND COPPER FOIL MANUFACTURING APPARATUS**

(30) Priority: 17.06.2022 KR 20220074192
(71) Applicant: SK Nexilis Co., Ltd., Jeollabuk-do 56137 (KR)
(72) Inventor: Ko, Su Jeong, Jeongeup-si, Jeollabuk-do 56137 (KR); Kim, Hye Won, Jeongeup-si, Jeollabuk-do 56137 (KR); Kim, Dong Woo, Jeongeup-si, Jeollabuk-do 56137 (KR); Yoon, Min Seok, Jeongeup-si, Jeollabuk-do 56137 (KR)
(74) Representative: Ter Meer Steinmeister & Partner

(57) **Abstract**

The present disclosure relates to a copper foil manufacturing apparatus including an electrodeposition unit configured to electrodeposit a copper foil in an electroplating method using an electrolyte and a winding unit configured to wind the copper foil supplied from the electrodeposition unit, wherein the electrodeposition unit includes a negative electrode drum on which the electrodeposited copper foil is electrodeposited in the electroplating method using the electrolyte and a positive electrode unit electrically connected with the negative electrode drum through the electrolyte, the positive electrode unit includes a positive electrode body spaced apart from the negative electrode drum, a plurality of positive electrode plates disposed on an upper surface of the positive electrode body, and a plurality of fastening units fastening each of the positive electrode plates to the positive electrode body, the positive electrode plates includes a base positive electrode plate coupled to the positive electrode body to be disposed between a left end of the positive electrode body and a right end of the positive electrode body, a first positive electrode plate coupled to one side of the base positive electrode plate, and a second positive electrode plate coupled to the other side of the base positive electrode plate to be spaced apart from the first positive electrode plate, the base positive electrode plate is coupled to the positive electrode body by a base fastening member among the fastening units, the first positive electrode plate partially overlaps the base positive electrode plate to cover the base fastening member, and the second positive electrode plate partially overlaps the base positive electrode plate at a position spaced apart from the first positive electrode plate to cover the base fastening member.

## Description

### BACKGROUND

### Field of the Invention

The present disclosure relates to a copper foil manufacturing apparatus used for manufacturing various products such as a negative electrode for a secondary battery, a flexible printed circuit board, etc.

### Discussion of the Related Art

Copper foils are used for manufacturing various products such as negative electrodes for secondary batteries, flexible printed circuit boards (FPCBs), etc. The copper foils are manufactured through an electroplating method in which an electrolyte is supplied between a positive electrode and a negative electrode and then a current flows therebetween.

In manufacturing the copper foils through the electroplating method as described above, a copper foil manufacturing apparatus is used. The copper foil manufacturing apparatus includes a negative electrode drum for electrodepositing the copper foil using the electroplating method using an electrolyte, a positive electrode plate electrically connected to the negative electrode drum through the electrolyte, and a positive electrode body for supporting the positive electrode plate. The positive electrode plate is coupled to the positive electrode body through a base fastening member such as a screw.

Here, in the copper foil manufacturing apparatus according to the related art, the base fastening member and the positive electrode plate may be coupled to the positive electrode body to be spaced different distances from the negative electrode drum due to an assembly step difference. Therefore, in the copper foil manufacturing apparatus according to the related art, as current density is formed differently around the base fastening member and the positive electrode plate, current density in the electrolyte is not uniformly formed. Therefore, in the copper foil manufacturing apparatus according to the related art, since a thickness of the copper foil electrodeposited on the negative electrode drum is not formed uniformly, there is a problem that the quality of the copper foil is degraded.

### SUMMARY

The present disclosure is directed to providing a copper foil manufacturing apparatus capable of preventing the quality of the copper foil from being degraded as current density is not uniformly formed due to a base fastening member.

In order to achieve the object, the present disclosure may include the following configuration.

A copper foil manufacturing apparatus according to the present disclosure includes an electrodeposition unit configured to electrodeposit a copper foil in an electroplating method using an electrolyte and a winding unit configured to wind the copper foil supplied from the electrodeposition unit, wherein the electrodeposition unit may include a negative electrode drum on which the electrodeposited copper foil is electrodeposited in the electroplating method using the electrolyte and a positive electrode unit electrically connected with the negative electrode drum through the electrolyte. The positive electrode unit may include a positive electrode body spaced apart from the negative electrode drum, a plurality of positive electrode plates disposed on an upper surface of the positive electrode body, and a plurality of fastening units fastening each of the positive electrode plates to the positive electrode body. The positive electrode plates may include a base positive electrode plate coupled to the positive electrode body to be disposed between a left end of the positive electrode body and a right end of the positive electrode body, a first positive electrode plate coupled to one side of the base positive electrode plate, and a second positive electrode plate coupled to the other side of the base positive electrode plate to be spaced apart from the first positive electrode plate. The base positive electrode plate may be coupled to the positive electrode body by a base fastening member among the fastening units. The first positive electrode plate may partially overlap the base positive electrode plate to cover the base fastening member. The second positive electrode plate may partially overlap the base positive electrode plate at a position spaced apart from the first positive electrode plate to cover the base fastening member.

According to the present disclosure, it is possible to achieve the following effects.

According to the present disclosure, base fastening units for coupling positive electrode plates to a positive electrode body can be implemented to be covered by a first positive electrode plate and a second positive electrode plate so as not to be directly exposed to the outside. Therefore, according to the present disclosure, by reducing a deviation of current density formed around the positive electrode plates, it is possible to improve the uniformity of the current density in an electrolyte. Therefore, according to the present disclosure, it is possible to manufacture a copper foil having improved quality.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is a schematic perspective view of a copper foil manufacturing apparatus according to the present disclosure;
FIG. 2 is a schematic perspective view of a positive electrode unit in the copper foil manufacturing apparatus according to the present disclosure;
FIG. 3 is a schematic perspective view of a positive electrode plate in the copper foil manufacturing apparatus according to the present disclosure;
FIG. 4 is a schematic exploded perspective view of the positive electrode plate in the copper foil manufacturing apparatus according to the present disclosure;
FIG. 5 is a schematic cross-sectional view of the positive electrode plate along line I-I of FIG. 3 in the copper foil manufacturing apparatus according to the present disclosure;
FIG. 6 is an exploded view of FIG. 5;
FIG. 7 is a conceptual diagram showing a state in which a base positive electrode plate and a first positive electrode plate are coupled in the copper foil manufacturing apparatus according to the present disclosure;
FIG. 8 is a conceptual diagram showing a modified embodiment of positive electrode plates in the copper foil manufacturing apparatus according to the present disclosure; and
FIG. 9 shows exploded views of the positive electrode plates of FIG. 8.

### DETAILED DESCRIPTION OF THE DISCLOSURE

Hereinafter, a copper foil manufacturing apparatus according to embodiments of the present disclosure will be described in detail with reference to the accompanying drawings.

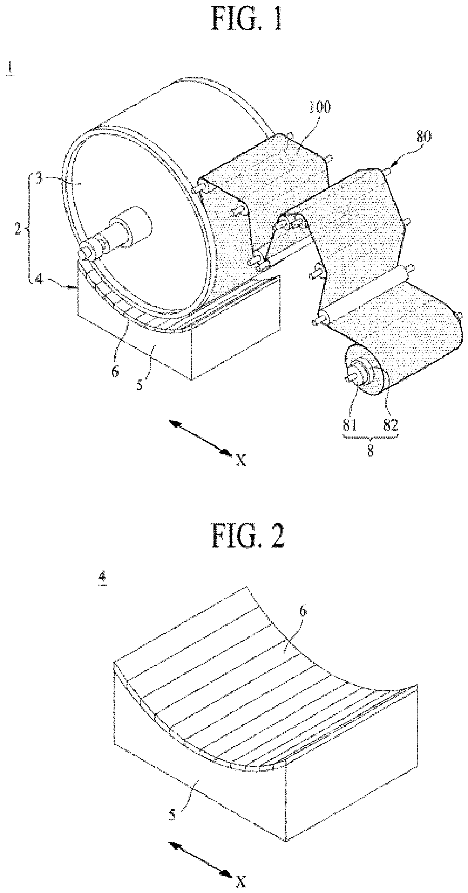

Referring to FIG. 1, a copper foil manufacturing apparatus 1 according to the present disclosure manufactures a copper foil 100 using an electroplating method. The copper foil manufacturing apparatus 1 according to the present disclosure may include an electrodeposition unit 2 and a winding unit 8.

Referring to FIG. 1, the electrodeposition unit 2 electrodeposits a copper foil 100. The electrodeposition unit 2 may electrodeposit the copper foil 100 in the electroplating method using an electrolyte. The electrodeposition unit 2 may include a negative electrode drum 3 and a positive electrode unit 4. When the negative electrode drum 3 and the positive electrode unit 4 are electrically connected through the electrolyte and a current flows, copper ions dissolved in the electrolyte may be reduced in the negative electrode drum 3. Therefore, the electrodeposition unit 2 may electrodeposit the copper foil 100 on a surface of the negative electrode drum 3.

The negative electrode drum 3 may rotate about a rotational axis. The negative electrode drum 3 may consecutively perform an electrodepositing operation of electrodepositing the copper foil 100 on the surface thereof and an unwinding operation of separating the electrodeposited copper foil 100 from the surface while rotating about the rotational axis. The negative electrode drum 3 may be formed in a drum shape as a whole, but is not limited thereto and may also be formed in a different shape as long as it may consecutively perform the electrodepositing operation and the unwinding operation while rotating about the rotational axis. The negative electrode drum 3 may be rotated by a driving force generated by a negative electrode mechanism (not shown). The negative electrode drum 3 may be coupled to a frame (not shown). Although not shown, the frame may be installed on a bottom surface of a workshop in which the copper foil manufacturing apparatus 1 according to the present disclosure is installed.

The positive electrode unit 4 is electrically connected with the negative electrode drum 3 through the electrolyte. The positive electrode unit 4 may be disposed under the negative electrode drum 3. The positive electrode unit 4 may be disposed to be spaced apart from the surface of the negative electrode drum 3. A surface of the positive electrode unit 4 and the surface of the negative electrode drum 3 may be formed in the same shape. For example, when the negative electrode drum 3 is formed in a circular rectangular shape to have a curved surface, the positive electrode unit 4 may be formed in a semicircular rectangular shape to have a curved surface.

Referring to FIG. 1, the winding unit 8 winds the copper foil 100. The copper foil 100 manufactured by the electrodeposition unit 2 may be wound around the winding unit 8. The winding unit 8 may be coupled to the frame.

The winding unit 8 may include a winding roller 81. The winding roller may wind the copper foil 100 while rotating about the rotational axis. The winding roller 81 may be formed in a drum shape as a whole, but is not limited thereto and may also be formed in other shapes as long as it may wind the copper foil 100 while rotating about the rotational axis. The winding roller 81 may be rotated by a driving force generated by a winding mechanism (not shown).

A core 82 may be mounted on the winding unit 8. The core 82 may be mounted on the winding roller 81 to surround the winding roller 81. As the winding roller 81 rotates, the copper foil 100 may be wound around the core 82. The core 82 may be detachably mounted on the winding unit 8. Therefore, when the winding of the copper foil 100 around the core 82 is completed or a defect occurs, a replacement operation of separating the core 82 from the winding unit 8 and mounting a new core 82 may be performed. Meanwhile, the core 82 and the winding roller 81 may also be integrally formed. In this case, when the winding of the copper foil 100 around the core 82 is completed, the core 82 and the winding roller 81 may be integrally separated and then conveyed to equipment for a subsequent process.

The copper foil 100 may be conveyed from the electrodeposition unit 2 to the winding unit 8 by the conveying unit 80. The conveying unit 80 conveys the copper foil 100. In the process of conveying the copper foil 100 from the electrodeposition unit 2 to the winding unit 8 by the conveying unit 80, a drying operation of drying the copper foil 100, a rust prevention operation of performing a rust prevention treatment for the copper foil 100, and a cutting operation of cutting a portion of the copper foil 100 may be performed. The conveying unit 80 may be disposed between the electrodeposition unit 2 and the winding unit 8. The conveying unit 80 may be coupled to the frame. The conveying unit 80 may include a conveying roller. The conveying roller may convey the copper foil 100 from the electrodeposition unit 2 to the winding unit 8 while rotating about a rotational axis. The conveying roller may be formed in a drum shape as a whole, but is not limited thereto and may also be formed in other shapes as long as it may convey the copper foil 100 while rotating about the rotational axis. The conveying unit 80 may also include a plurality of conveying rollers. The conveying rollers may be disposed at positions spaced apart from each other to convey the copper foil 100. At least one of the conveying rollers may be rotated by a driving force generated by a conveying mechanism (not shown).

Here, the copper foil manufacturing apparatus 1 according to the present disclosure can be implemented to improve the uniformity of the current density in the electrolyte positioned between the negative electrode drum 3 and the positive electrode unit 4. To this end, the positive electrode unit 4 in the copper foil manufacturing apparatus 1 according to the present disclosure can be implemented as follows.

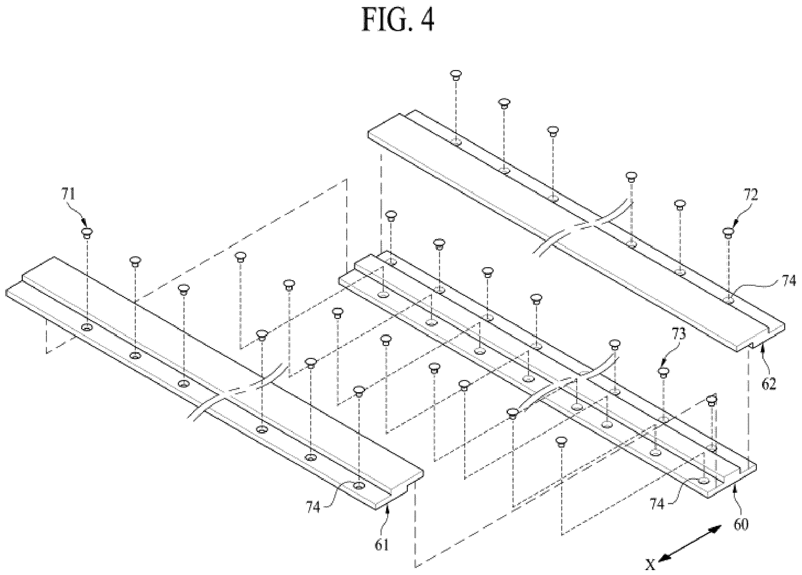

Referring to FIGS. 1 to 4, the positive electrode unit 4 may include a positive electrode body 5, a plurality of positive electrode plates 6, and a plurality of fastening units 7.

The positive electrode body 5 is spaced apart from the negative electrode drum 3. The positive electrode plates 6 may be coupled to the positive electrode body 5. The positive electrode body 5 may support the positive electrode plates 6. The positive electrode body 5 may be disposed under the negative electrode drum 3 to be spaced apart from the negative electrode drum 3. The positive electrode body 5 may be coupled to the frame.

The positive electrode plates 6 are disposed on an upper surface of the positive electrode body 5. The positive electrode plates 6 may be disposed on the upper surface of the positive electrode body 5 to be electrically connected with the negative electrode drum 3 through the electrolyte. The positive electrode plates 6 may be disposed between the positive electrode body 5 and the negative electrode drum 3. The positive electrode plates 6 may be disposed to cover the upper surface of the positive electrode body 5. In this case, the positive electrode plates 6 may be installed in a form corresponding to the upper surface of the positive electrode body 5 and disposed to cover the entire upper surface of the positive electrode body 5. In the copper foil manufacturing apparatus 1 according to the present disclosure, the positive electrode unit 4 may be formed through a coupling operation of pressing and coupling the positive electrode plates 6 to the positive electrode body 5.

The fastening units 7 couple each of the positive electrode plates 6 to the positive electrode body 5.

The fastening units 7 may be formed to pass through the positive electrode plates 6. The fastening units 7 pass through the positive electrode plate 6 and are coupled to the positive electrode body 5 so that the positive electrode body 5 and the positive electrode plates 6 may be coupled. The plurality of fastening units 7 may be formed on the positive electrode plate 6. The number of fastening units 7 may be formed to correspond to the number of positive electrode plates 6. For example, one or more fastening units 7 may be formed on each of the base positive electrode plate 60, the first positive electrode plate 61, and the second positive electrode plate 62. In this case, the fastening unit 7 may include a first fastening member 71, a second fastening member 72, and a base fastening member 73. The first fastening member 71, the second fastening member 72, and the base fastening member 73 may be coupled to pass through a fastening hole 74.

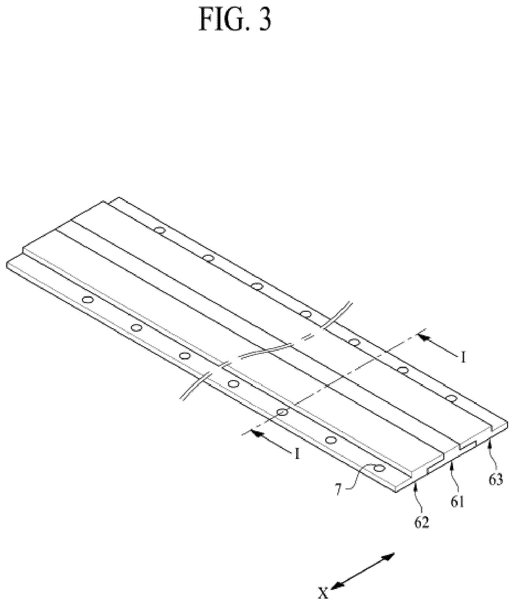

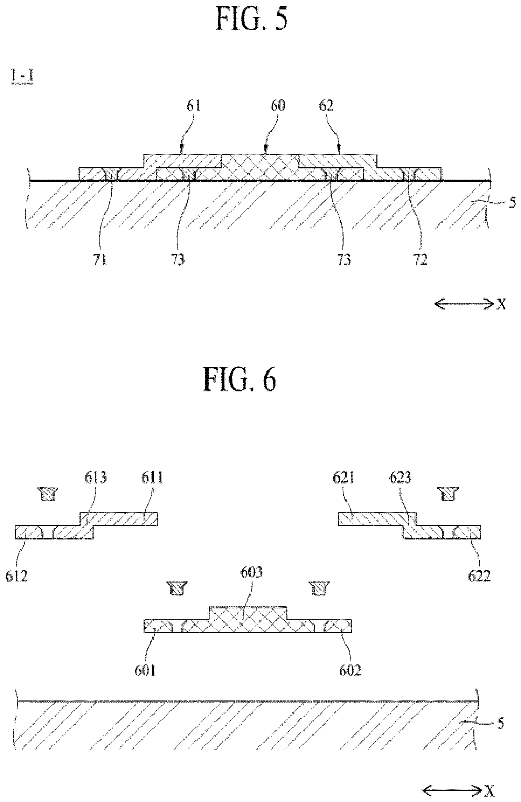

Referring to FIGS. 3 to 6, the positive electrode plates 6 may include the base positive electrode plate 60 coupled to the positive electrode body 5 to be disposed between a left end of the positive electrode body 5 and a right end of the positive electrode body 5, a first positive electrode plate 61 coupled to one side of the base positive electrode plate 60, and a second positive electrode plate 62 coupled to the other side of the base positive electrode plate 60 to be spaced apart from the positive electrode plate 61. In this case, the base positive electrode plate 60 may be coupled to the positive electrode body 5 by the base fastening member 73 among the fastening units 7. The first positive electrode plate 61 partially overlaps the base positive electrode plate 60 to cover the base fastening member 73, and the second positive electrode plate 62 may partially overlap the base positive electrode plate 60 at a position spaced apart from the first positive electrode plate 61 to cover the base fastening member 73. Therefore, the copper foil manufacturing apparatus 1 according to the present disclosure can limit an increase in current density around the base fastening member 73, thereby improving the uniformity of the current density in the electrolyte. Therefore, the copper foil manufacturing apparatus 1 according to the present disclosure can improve the uniformity of the thickness of the copper foil, thereby manufacturing the copper foil having more improved quality.

Hereinafter, a description will be made on the basis of the fact that the positive electrode plates 6 include the base positive electrode plate 60, the first positive electrode plate 61, and the second positive electrode plate 62. The number of positive electrode plates 6 is not limited thereto, and four or more positive electrode plates 6 may also be configured to cover the entire upper surface of the positive electrode body 5.

Referring to FIGS. 3 to 6, the base positive electrode plate 60 may include a first base portion 601, a second base portion 602, and a middle base portion 603.

The first base portion 601 overlaps the first positive electrode plate 61. The first base portion 601 may partially overlap the first positive electrode plate 61. The fastening hole 74 may be formed in the first base portion 601. In this case, the base fastening member 73 may pass through the fastening hole 74 and may be coupled to the positive electrode body 5. Therefore, the base positive electrode plate 60 may be coupled to the positive electrode body 5.

The second base portion 602 overlaps the second positive electrode plate 62. The second base portion 602 may partially overlap the second positive electrode plate 62. The fastening hole 74 may be formed in the second base portion 602. In this case, the base fastening member 73 may pass through the fastening hole 74 and may be coupled to the positive electrode body 5. Therefore, the base positive electrode plate 60 may be coupled to the positive electrode body 5. As described above, the base positive electrode plate 60 may be coupled to the positive electrode body 5 by the base fastening members 73 disposed on both sides thereof and thus coupled to the positive electrode body 5 firmly as compared to a case in which the base fastening member 73 is disposed on one side.

The middle base portion 603 is disposed between the first base portion 601 and the second base portion 602 to connect the first base portion 601 and the second base portion 602. The middle base portion 603 may be formed to have a greater thickness than the first base portion 601 and the second base portion 602. In other words, an upper surface of the middle base portion 603 may be disposed at a higher position than an upper surface of the first base portion 601 and an upper surface of the second base portion 602. The middle base portion 603 may be disposed between the first positive electrode plate 61 and the second positive electrode plate 62.

The base positive electrode plate 60 may be coupled to the positive electrode body 5 by the base fastening member 73. The base fastening member 73 may be coupled to the fastening hole 74 formed to pass through the base positive electrode plate 60. In this case, the fastening hole 74 may be formed in the first base portion 601 and the second base portion 602. On the other hand, the fastening hole 74 may not be formed in the middle base portion 603. The base positive electrode plate 60 may be coupled to the positive electrode body 5 by the base fastening members 73 coupled to the first base portion 601 and the second base portion 602. In this case, the base fastening members 73 may be covered by the first positive electrode plate 61 and the second positive electrode plate 62. Therefore, the copper foil manufacturing apparatus 1 according to the present disclosure can be implemented so that the base fastening members 73 are not exposed to the outside. Therefore, the copper foil manufacturing apparatus 1 according to the present disclosure can reduce a deviation of the current density formed around the positive electrode plates 6, thereby improving the uniformity of the current density in the electrolyte. Therefore, the copper foil manufacturing apparatus 1 according to the present disclosure can improve the uniformity of the thickness of the copper foil 100, thereby manufacturing the copper foil 100 having improved quality.

Referring to FIGS. 3 to 6, the first positive electrode plate 61 may include a first covering member 611 and a first coupling member 612.

The first covering member 611 is disposed above the first base portion 601. The first covering member 611 may be coupled to the positive electrode body 5 to overlap the first base portion 601. The first covering member 611 may be disposed to cover the upper surface of the first base portion 601. The first coupling member 612 may be disposed to be spaced apart from the first covering member 611. The first coupling member 612 may be disposed on the upper surface of the positive electrode body 5 and disposed to cover a portion of the positive electrode body 5.

The fastening hole 74 may be formed in the first coupling member 612. In this case, the first fastening member 71 may be coupled to the fastening hole 74. Therefore, the first positive electrode plate 61 may be coupled to the positive electrode body 5 by the first fastening member 71. The first fastening member 71 may be covered by some of the positive electrode plates 6. Therefore, the first fastening member 71 can be implemented not to be directly exposed to the negative electrode drum 3. Therefore, the copper foil manufacturing apparatus 1 according to the present disclosure can reduce the deviation of the current density formed around the positive electrode plate 6, thereby improving the uniformity of the current density in the electrolyte.

Referring to FIGS. 3 to 6, the first positive electrode plate 61 may include a first bending member 613.

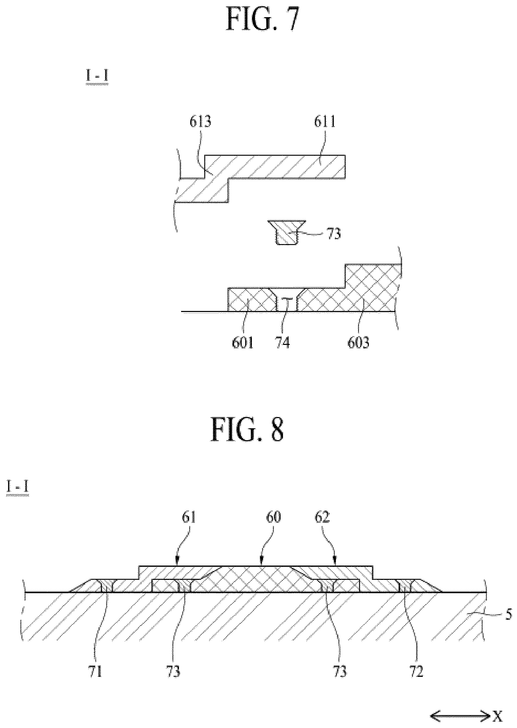

The first bending member 613 connects the first covering member 611 and the first coupling member 612. The first bending member 613 may be bent so that the first covering member 611 and the first coupling member 612 are disposed at different heights. Therefore, when the first positive electrode plate 61 is coupled to the positive electrode body 5, the first covering member 611 and the first coupling member 612 may be formed to be spaced different distances from the positive electrode body 5. For example, as shown in FIG. 7, when the first positive electrode plate 61 is coupled to the positive electrode body 5, the first coupling member 612 may be coupled in close contact with the positive electrode body 5. On the other hand, the first covering member 611 may be disposed to be spaced a predetermined distance from the positive electrode body 5. Therefore, the first base portion 601 may be disposed in a space formed between the first covering member 611 and the positive electrode body 5. Therefore, in the copper foil manufacturing apparatus 1 according to the present disclosure, the first covering member 611 may be disposed to cover the base fastening member 73 coupled to the first base portion 601. Therefore, in the copper foil manufacturing apparatus 1 according to the present disclosure, the base fastening member 73 can be implemented not to be directly exposed to the negative electrode drum 3. Therefore, the copper foil manufacturing apparatus 1 according to the present disclosure can reduce the deviation of the current density formed around the positive electrode plates 6, thereby improving the uniformity of the current density in the electrolyte.

Referring to FIG. 7, after the base positive electrode plate 60 is coupled to the positive electrode body 5, the first positive electrode plate 61 is coupled to the positive electrode body 5. The first positive electrode plate 61 may be coupled to the positive electrode body 5 to cover a portion of the base positive electrode plate 60. In this case, the first covering member 611 may be disposed to cover a portion of the base positive electrode plate 60. The first covering member 611 may be disposed to cover the first base portion 601 and disposed at the same height as the middle base portion 603. Therefore, in the copper foil manufacturing apparatus 1 according to the present disclosure, the upper surface of the positive electrode plate 6 may be formed flat. Therefore, the copper foil manufacturing apparatus 1 according to the present disclosure can be implemented so that the entire thickness of the positive electrode plate 6 in the height direction may be uniformly formed through the coupling operation. In addition, when the base positive electrode plate 60 is coupled to the positive electrode body 5 and then the first positive electrode plate 61 is coupled thereto, the first base portion 601 may be disposed between the first covering member 611 and the positive electrode body 5 so that one end of the first base portion 601 is in contact with the bending member. In other words, the first base portion 601 may be formed in a shape that fills the entire space formed between the first covering member 611 and the positive electrode body 5. Therefore, when the positive electrode plate 6 is coupled to the positive electrode body 5 through the coupling operation, the positive electrode plate 6 may be formed to have a uniform thickness in the height direction. Therefore, in the copper foil manufacturing apparatus 1 according to the present disclosure, a distance between the negative electrode drum 3 and the positive electrode plate 6 may be uniformly formed. The height direction is a direction from the positive electrode body 5 toward the negative electrode drum 3.

Referring to FIGS. 3 to 6, the second positive electrode plate 62 may include the second covering member 621 and the second coupling member 622.

The second covering member 621 may be coupled to the positive electrode body 5 to overlap a portion of the base positive electrode plate 60. The second covering member 621 may be disposed to cover the second base portion 602. In this case, the second covering member 621 may be disposed on an upper surface of the base positive electrode plate 60. The second coupling member 622 may be disposed to be spaced apart from the second covering member 621. The second coupling member 622 may be disposed to cover a portion of the positive electrode body 5. In this case, the second coupling member 622 may be disposed on the upper surface of the positive electrode body 5.

The fastening hole 74 may be formed in the second coupling member 622. In this case, the second fastening member 72 may be coupled to the fastening hole 74. Therefore, the second positive electrode plate 62 may be coupled to the positive electrode body 5 by the second fastening member 72. The second fastening member 72 may be covered by some of the positive electrode plates 6. Therefore, the second fastening member 72 can be implemented not to be directly exposed to the negative electrode drum 3. Therefore, the copper foil manufacturing apparatus 1 according to the present disclosure can reduce the deviation of the current density formed around the positive electrode plates 6, thereby improving the uniformity of the current density in the electrolyte.

Referring to FIGS. 3 to 6, the second positive electrode plate 62 may include the second bending member 623.

The second bending member 623 connects the second covering member 621 and the second coupling member 622. The second bending member 623 may be disposed between the second covering member 621 and the second coupling member 622 to connect the second covering member 621 and the second coupling member 622. In this case, the second bending member 623 may be bent so that the second covering member 621 and the second coupling member 622 are disposed at different heights. In other words, the second covering member 621 and the second coupling member 622 may be disposed to be spaced different distances from the positive electrode body 5 by the second bending member 623. For example, when the second positive electrode plate 62 is coupled to the positive electrode body 5, the second coupling member 622 may be coupled in close contact with the positive electrode body 5. On the other hand, when the second positive electrode plate 62 is coupled to the positive electrode body 5, the second covering member 621 may be disposed to be spaced a predetermined distance from the positive electrode body 5. The second base portion 602 may be disposed between the second covering member 621 and the positive electrode body 5.

The second positive electrode plate 62 may be formed to be symmetrical with the first positive electrode plate 61 with respect to the base positive electrode plate 60. In this case, the second positive electrode plate 62 may be coupled to the positive electrode body 5 to face the first positive electrode plate 61 with respect to the base positive electrode plate 60. Some of the positive electrode plates 6 may be consecutively disposed to partially overlap each other in a direction in which the first positive electrode plate 61 is disposed with respect to the base positive electrode plate 60. Some of the positive electrode plates 6 may be consecutively disposed to partially overlap each other in a direction in which the second positive electrode plate 62 is disposed with respect to the base positive electrode plate 60. Therefore, in the copper foil manufacturing apparatus 1 according to the present disclosure, the positive electrode plates 6 may be coupled to the positive electrode body 5 to cover the entire upper surface of the positive electrode body 5. As described above, since the positive electrode plates 6 are formed to have a uniform thickness through the coupling operation, the distance between the positive electrode plate 6 and the negative electrode drum 3 may also be uniformly formed. In addition, since the positive electrode plates 6 partially overlap each other and are disposed to cover the entire upper surface of the positive electrode body 5, the fastening units 7 can be implemented so that none of the fastening units 7 are exposed to the outside. Therefore, in the copper foil manufacturing apparatus 1 according to the present disclosure, the current density in the electrolyte may be uniformly formed, and the uniformity of the thickness of the copper foil can be improved.

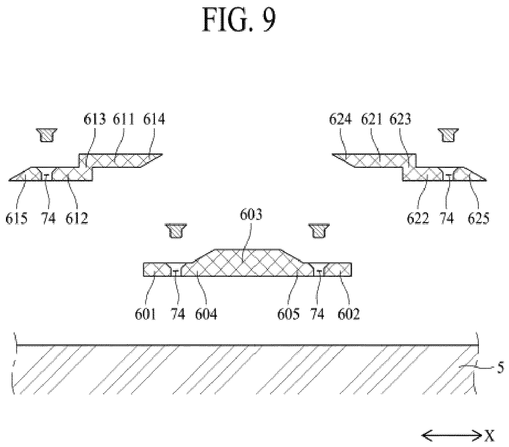

Hereinafter, a modified embodiment of the positive electrode plate 6 will be described with reference to FIGS. 2, 8, and 9.

The base portion may include a first increase member 604 and a second increase member 605. The first increase member 604 is coupled to each of the first base portion 601 and the middle base portion 603 between the first base portion 601 and the middle base portion 603. The first increase member 604 may be formed to have a greater size as the first increase member 604 extends in a direction from the first base portion 601 toward the middle base portion 603. The second increase member 605 is coupled to each of the second base portion 602 and the middle base portion 603 between the second base portion 602 and the middle base portion 603. The second increase member 605 may be formed to have a greater size as the second increase member 605 extends in a direction from the second base portion 602 toward the middle base portion 603. Therefore, upper surfaces of the first increase member 604, the middle base portion 603, and the second increase member 605 may be formed to be connected.

Meanwhile, the first positive electrode plate 61 may include a first covering reduction member 614 and a first coupling reduction member 615. The first covering reduction member 614 is formed to have a smaller size as the first covering reduction member 614 extends in a direction from the first positive electrode plate 61 toward the base positive electrode plate 60. The first covering reduction member 614 may be disposed to cover an upper surface of the first increase member 604. The first coupling reduction member 615 may be formed to have a smaller size as the first coupling reduction member 615 extends in a direction from the base positive electrode plate 60 toward the first positive electrode plate 61. The first coupling reduction member 615 may extend in a direction different from that of the first covering reduction member 614. As described above, as the first increase member 604 is formed to have a greater size as the first increase member 604 extends in one direction and the first covering reduction member 614 is formed to have a smaller size as the first covering reduction member 614 extends in a direction opposite to the direction in which the first increase member 604 extends, the upper surface of the positive electrode plate 6 may be formed flat.

The second positive electrode plate 62 may include a second covering reduction member 624 and a second coupling reduction member 625. Since the second covering reduction member 624 and the second coupling reduction member 625 may be formed to be substantially the same as the first covering reduction member 614 and the first coupling reduction member 615, respectively, a detailed description thereof is omitted. The second covering reduction member 624 may be disposed to cover an upper surface of the second increase member 605.

## Claims

1. A positive electrode plate (6) for a copper foil manufacturing apparatus, comprising:
a base positive electrode plate (60) coupled to a positive electrode body (5) of the copper foil manufacturing apparatus;
a first positive electrode plate (61) partially overlapping the base positive electrode plate (60) to cover a portion of the base positive electrode plate (60); and
a second positive electrode plate (62) partially overlapping the base positive electrode plate (60) at a position spaced apart from the first positive electrode plate (61) to cover a portion of the base positive electrode plate (60),
wherein the first positive electrode plate (61) and the second positive electrode plate (62) are disposed to cover a base fastening member (73) coupled to the base positive electrode plate (60).

2. The positive electrode plate of claim 1, wherein the base positive electrode plate (60) includes a first base portion (601) overlapping the first positive electrode plate (61), a second base portion (602) overlapping the second positive electrode plate (62), and a middle base portion (603) disposed between the first base portion (601) and the second base portion (602) to connect the first base portion (601) and the second base portion (602),
the first positive electrode plate (61) includes a first covering member (611) disposed above the first base portion (601), and
an upper surface of the middle base portion (603) is disposed at a higher position than an upper surface of the first base portion (601).

3. The positive electrode plate of claim 2, wherein the first covering member (611) is disposed to cover the first base portion (601) and disposed at the same height as the middle base portion (603).

4. The positive electrode plate of claim 1, wherein the base positive electrode plate (60) includes:
a first base portion (601) overlapping the first positive electrode plate (61);
a second base portion (602) overlapping the second positive electrode plate (62);
a middle base portion (603) disposed between the first base portion (601) and the second base portion (602) to connect the first base portion (601) and the second base portion (602); and
a first increase member (604) coupled to each of the first base portion (601) and the middle base portion (603) between the first base portion (601) and the middle base portion (603), and
the first increase member (604) is formed to have a greater size as the first increase member (604) extends in a direction from the first base portion (601) toward the middle base portion (603).

5. The positive electrode plate of claim 2, wherein the first positive electrode plate (61) includes a first covering reduction member (614) coupled to the first covering member (611), and
the first covering reduction member (614) is formed to have a smaller size as the first covering reduction member (614) extends in a direction from the first positive electrode plate (61) toward the base positive electrode plate (60).

6. A copper foil manufacturing apparatus, comprising:
an electrodeposition unit (2) configured to electrodeposit a copper foil in an electroplating method using an electrolyte; and
a winding unit configured to wind the copper foil supplied from the electrodeposition unit (2),
wherein the electrodeposition unit (2) includes a negative electrode drum (3) on which the electrodeposited copper foil is electrodeposited in the electroplating method using the electrolyte and a positive electrode unit (4) electrically connected with the negative electrode drum (3) through the electrolyte,
the positive electrode unit (4) includes a positive electrode body (5) spaced apart from the negative electrode drum (3), a plurality of positive electrode plates (6), according to one of claims 1 to 5, disposed on an upper surface of the positive electrode body (5), and a plurality of fastening units (7) fastening each of the positive electrode plates (6) to the positive electrode body (5),
the positive electrode plates (6) include a base positive electrode plate (60) coupled to the positive electrode body (5) to be disposed between a left end of the positive electrode body (5) and a right end of the positive electrode body (5), a first positive electrode plate (61) coupled to one side of the base positive electrode plate (60), and a second positive electrode plate (62) coupled to the other side of the base positive electrode plate (60) to be spaced apart from the first positive electrode plate (61),
the base positive electrode plate (60) is coupled to the positive electrode body (5) by a base fastening member (73) among the fastening units (7),
the first positive electrode plate (61) partially overlaps the base positive electrode plate (60) to cover the base fastening member (73), and
the second positive electrode plate (62) partially overlaps the base positive electrode plate (60) at a position spaced apart from the first positive electrode plate (61) to cover the base fastening member (73),
wherein the first positive electrode plate (61) includes a first covering member (611) disposed above the first base portion (601), a first coupling member (612) disposed to be spaced apart from the first covering member (611), and a first bending member (613) connecting the first covering member (611) and the first coupling member (612), and
the first bending member (613) is bent so that the first covering member (611) and the first coupling member (612) are disposed at different heights.

7. The apparatus of claim 6, wherein the base positive electrode plate (60) includes a first base portion (601) overlapping the first positive electrode plate (61),
the first positive electrode plate (61) includes a first covering member (611) disposed above the first base portion (601), and
the fastening unit (7) is not formed on the first covering member (611).

8. The apparatus of claim 6, wherein the first base portion (601) is disposed between the first covering member (611) and the positive electrode body (5) so that one end of the first base portion (601) is in contact with the first bending member (613).

9. The apparatus of claim 6, wherein some of the positive electrode plates (6) are consecutively disposed to partially overlap each other in a direction in which the first positive electrode plate (61) is disposed with respect to the base positive electrode plate (60), and
some of the positive electrode plates (6) are consecutively disposed to partially overlap each other in a direction in which the second positive electrode plate (62) is disposed with respect to the base positive electrode plate (60).

10. The apparatus of claim 6, wherein the base positive electrode plate (60) includes a first base portion (601) overlapping the first positive electrode plate (61), a second base portion (602) overlapping the second positive electrode plate (62), and a middle base portion (603) disposed between the first base portion (601) and the second base portion (602) to connect the first base portion (601) and the second base portion (602),
the first positive electrode plate (61) is disposed above the first base portion (601) to cover the base fastening member (73) formed on the first base portion (601),
the second positive electrode plate (62) is disposed above the second base portion (602) to cover the base fastening member (73) formed on the second base portion (602), and the base fastening member (73) is not formed on the middle base portion (603).
